Europäisches Patentamt

European Patent Office

Office européen des brevets

(19)

(11) Veröffentlichungsnummer : **0 350 999 B1**

(12) **EUROPÄISCHE PATENTSCHRIFT**

(45) Veröffentlichungstag der Patentschrift :
**12.10.94 Patentblatt 94/41**

(51) Int. Cl.$^5$ : **H04L 27/14**

(21) Anmeldenummer : **89201786.4**

(22) Anmeldetag : **06.07.89**

(54) **Vorrichtung zur Entzerrung und Demodulation binärer phasenstetig winkelmodulierter Datensignale mit Modulationsindex 0,5.**

(30) Priorität : **09.07.88 DE 3823374**

(43) Veröffentlichungstag der Anmeldung :
**17.01.90 Patentblatt 90/03**

(45) Bekanntmachung des Hinweises auf die
Patenterteilung :
**12.10.94 Patentblatt 94/41**

(84) Benannte Vertragsstaaten :
**DE FR GB IT SE**

(56) Entgegenhaltungen :
**IEEE TRANSACTIONS ON COMMUNICA-
TIONS, vol. COM 35, no. 1, Januar 1988, NEW
YORK, US, Seiten 32-40; SADR AND OMURA:
"GENERALIZED MINIMUM SHIFT-KEYING
MODULATION TECHNIQUES"**

(73) Patentinhaber : **Philips Patentverwaltung
GmbH
Wendenstrasse 35c
D-20097 Hamburg (DE)**
(84) **DE**
Patentinhaber : **N.V. Philips'
Gloeilampenfabrieken
Groenewoudseweg 1
NL-5621 BA Eindhoven (NL)**
(84) **FR GB IT SE**

(72) Erfinder : **Baier, Alfred, Dr.-Ing.
Lindenstrasse 14
D-8501 Eckental (DE)**

(74) Vertreter : **Peuckert, Hermann, Dipl.-Ing. et al
Philips Patentverwaltung GmbH,
Wendenstrasse 35c
D-20097 Hamburg (DE)**

EP 0 350 999 B1

## Beschreibung

Die Erfindung bezieht sich auf eine Vorrichtung zur Entzerrung und Demodulation eines binären phasenstetig winkelmodulierten Datensignals mit dem Modulationsindex h = 0,5, wobei die Vorrichtung mit einem Basisbandumsetzer versehen ist zur Erzeugung der beiden Quadraturkomponenten eines empfangenen modulierten Datensignals im Basisband und mit einem Entzerrer/Detektor, welchem beide Quadraturkomponenten zur Rückgewinnung des ursprünglichen binären Datensignals zugeführt werden.

Bei Nachrichtenübertragungssystemen mit dispersiven Übertragungskanälen wird das zu übertragende Signal durch Laufzeitunterschiede und Phasenverschiebungen verzerrt. Bei einer digitalen Nachrichtenübertragung äußern sich diese Verzerrungen durch Nachbarzeichenstörungen im empfangenen Signal. Darüber hinaus kann das Empfangssignal durch Rauschen oder sonstige Störsignale beeinträchtigt sein. Um den ursprünglichen Dateninhalt des Signales zurückzugewinnen ist es erforderlich, das empfangene Signal zu entzerren.

Entzerrer für Datensignale mit linearer Modulation, wie beispielsweise Puls-Amplituden-Modulation (PAM) oder Quadratur-Amplituden-Modulation (QAM), sind in der Literatur sehr ausführlich beschrieben und untersucht. Ihre technische Realisierung ist in der Regel mit vertretbarem Aufwand möglich. Anders ist dies mit Entzerrern für Datensignale mit nicht-linearer Winkelmodulation, wie beispielsweise einer Frequenzmodulation mit stetigem Phasenverlauf, die als Continuous-Phase-Modulation (CPM) bezeichnet wird. Die aus der Literatur bekannten Entzerrungsverfahren und -einrichtungen für CPM-Signale sind im allgemeinen sehr kompliziert und aufwendig und damit für eine kostengünstige technische Realisierung eher ungeeignet. Insbesondere trifft dies zu bei CPM-Modulationsarten, die ein Partial-Response-Verfahren verwenden, d.h., bei denen der Signalverlauf des modulierten Signales nicht nur vom augenblicklich zu übertragenden Datenbit abhängt, sondern in definierter Weise auch von einer festen Anzahl der diesem Datenbit unmittelbar vorangegangenen Datenbits. Beispiele wichtiger binärer Partial-Response-CPM-Modulationen sind Gaussian Minimum Shift Keying (GMSK) und Generalized Tamed Frequency Modulation (GTFM).

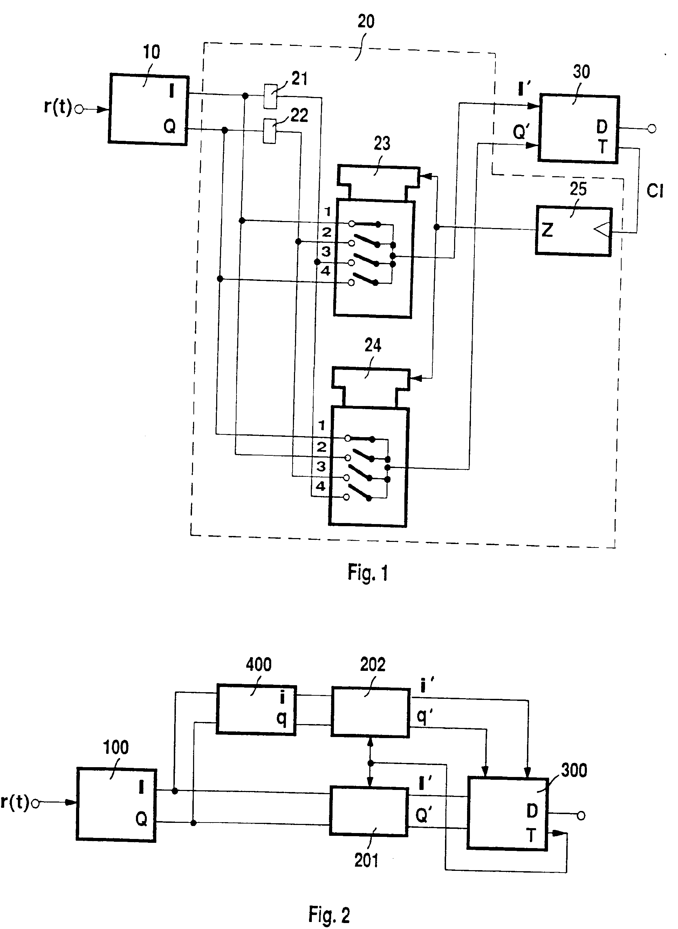

Eine Vorrichtung zur Entzerrung und Demodulation eines Partial-Response-CPM-Signales ist zum Beispiel aus dem Aufsatz "On Optimum and Suboptimum Coherent Detection of Continuous Phase Modulation on a Two-Ray Multipath Fading Channel", N.A.B. Svensson, IEEE Transactions on Communications, Vol. Com-35, No. 10, Seiten 1041 bis 1049, Oktober 1975, bekannt. Diese Vorrichtung baut auf einem in dem Aufsatz "Continuous Phase Modulation", C.-E. Sundberg, IEEE Communications Magazine, Vol. 24, No. 4, Seiten 25 bis 38, April 1986, dargestellten Demodulator für verzerrungsfrei empfangene Partial-Response-CPM-Signale auf. Figur 10, Seite 31, der letztgenannten Veröffentlichung zeigt einen Quadraturempfänger, welcher aus einem Basisbandumsetzer und einem Viterbi-Detektor gebildet wird. Der Basisbandumsetzer besteht aus einem Bandpaßfilter, welchem das Eingangssignal zugeführt ist, zwei Mischern, welchen jeweils das bandpaßgefilterte Signal zugeführt ist und jeweils einem den Mischern nachgeschalteten Tiefpaßfilter. Das Mischsignal des ersten Mischers ist gegenüber dem Mischsignal des zweiten Mischers um 90° in der Phase nacheilend, wobei die Frequenz der Mischsignale der Trägerfrequenz des empfangenen modulierten Signales entspricht. Durch die den Mischern nachgeschalteten Tiefpaßfilter wird von dem Mischprodukt nur der niederfrequente Signalanteil durchgelassen. Das tiefpaßgefilterte Ausgangssignal des ersten Mischers wird hierbei als sogenannte In-Phase-Komponente (I-Komponente), das tiefpaßgefilterte Ausgangssignal des zweiten Mischers als sogenannte Quadratur-Phase-Komponente (Q-Komponente) bezeichnet. Diese beiden Signalkomponenten, im folgenden als Quadraturkomponenten bezeichnet, sind einem Viterbi-Detektor zugeführt, der nach dem Verfahren der Maximum Likelihood Sequence Estimation (MLSE) die gesendeten Daten zurückgewinnt. In dem Quadraturempfänger für verzerrte CPM-Signale gemäß der schon genannten Veröffentlichung von Svensson ist der Viterbi-Detektor durch einen Viterbi-Entzerrer ersetzt (siehe Figur 2, Seite 1043 der genannten Veröffentlichung), der ebenfalls nach dem MLSE-Verfahren arbeitet. Der Viterbi-Entzerrer nimmt gleichzeitig mit der Entzerrung die Detektion, d.h. die Rückgewinnung, der ursprünglichen zu übertragenden Daten vor. Er berücksichtigt dabei sowohl die Struktur und die Partial-Response-Eigenschaft der CPM-Modulation als auch die Charakteristik des verzerrenden Übertragungskanales. Prinzipiell lassen sich anstelle des Viterbi-Entzerrers auch andere Entzerrertypen, wie zum Beispiel Decision-Feedback-Entzerrer, verwenden, siehe die schon genannte Veröffentlichung von Svensson.

Die Tatsache, daß die CPM-Modulation eine nicht-lineare Winkelmodulation ist, und daß zu den linearen Nachbarzeichenstörungen durch den dispersiven Übertragungskanal noch nicht-lineare Nachbarzeichenstörungen durch die Partial-Response-Eigenschaft der Modulation kommen, macht Entzerrer für CPM-Signale erheblich komplizierter und aufwendiger als Entzerrer für linear-modulierte Datensignale wie PAM- oder QAM-Signale. Die Veröffentlichung von Svensson macht deutlich, daß sowohl die spezielle Struktur der phasenstetigen Frequenzmodulation, als auch die nicht-lineare Partial-Response-Charakteristik der Modulation, als auch die linearen Nachbarzeichenstörungen durch den dispersiven Übertragungskanal in komplizierter Weise im Entzerrer berücksichtigt werden müssen. Dies erfordert die Echtzeit-Ausführung einer sehr großen Anzahl von aufwendigen Multiplikationen und Additionen komplexer Größen.

Aufgabe der vorliegenden Erfindung ist es, eine gattungsgemäße Vorrichtung der eingangs genannten Art so auszugestalten, daß der Aufwand für die Entzerrung und Demodulation von binären CPM-modulierten Datensignalen verringert wird. Insbesondere ist im Hinblick auf eine kostengünstige technische Realisierbarkeit eine Vorrichtung zur Entzerrung und Demodulation von binären CPM-Signalen erstrebenswert, bei der - bei gleichbleibender Leistungsfähigkeit - ein durch die Modulationsart bedingter Mehraufwand an komplexen Rechenoperationen vermieden wird.

Gemäß der Erfindung wird diese Aufgabe dadurch gelöst, daß zwischen Basisbandumsetzer und Entzerrer/Detektor eine Vorverarbeitungseinheit vorgesehen ist zum Durchführen einer Signalverarbeitung, die einer in diskreten Schritten in einer vorgegebenen Rotationsrichtung fortlaufenden Phasenrotation des durch die Quadraturkomponenten dargestellten modulierten Datensignals im Basisband entspricht, wobei der Betrag des Winkels des diskreten Phasenrotationsschrittes pro Bitintervall des im modulierten Datensignal enthaltenen binären Datensignals sich auf 90° beläuft.

Durch die erfindungsgemäße Vorverarbeitung werden die ursprünglichen Quadraturkomponenten I und Q in Quadraturkomponenten I' und Q' eines modulierten Datensignals umgewandelt, deren Werte zu den Bittaktzeitpunkten im wesentlichen den Werten der Quadraturkomponenten entsprechen, die man erhalten hätte, wenn linear-modulierte binäre Datensignale, wie binäre PAM-Signale oder binäre PSK-Signale, gesendet worden wären. Durch die Tatsache, daß im allgemeinen die Basisbandumsetzung mit zeitabhängigen Trägerphasenfehlern einhergehen wird und der dispersive Übertragungskanal mit ebenfalls zeitabhängigen Mehrwege-Ausbreitungen behaftet sein wird, wird am Ausgang der Vorverarbeitungseinheit nicht nur eine In-Phase-Komponente I', sondern auch eine Quadratur-Phase-Komponente Q' ungleich Null, welche jedoch in bekannter Weise bei der Entzerrung berücksichtigt wird, so daß zur Detektion nur noch die reellen Zahlenwerte der entzerrten In-Phase-Komponente zu verarbeiten sind. Durch die erfindungsgemäße Vorverarbeitung braucht also nicht mehr die komplizierte Struktur der nicht-linearen Winkelmodulation eines CPM-Signals berücksichtigt zu werden, sondern es kann von der erheblich einfacheren Struktur einer linearen Amplitudenmodulation ausgegangen werden.

Gemäß einer vorteilhaften Ausgestaltung ist die Vorverarbeitungseinheit derart ausgestaltet, daß die Quadraturkomponenten I und Q im Rhythmus des Bittaktes vorverarbeitet werden, wobei in einem ersten Taktintervall des Bittaktes beide Quadraturkomponenten unverändert weitergegeben werden, in einem darauffolgenden zweiten Taktintervall eine der beiden Quadraturkomponenten invertiert wird, in einem dritten Taktintervall beide Quadraturkomponenten invertiert werden und in einem vierten Taktintervall die Quadraturkomponente invertiert wird, welche im zweiten Taktintervall nicht invertiert wurde, wobei jeweils im zweiten und vierten Taktintervall die beiden Quadraturkomponenten zusätzlich zu den beschriebenen Invertierungen miteinander vertauscht werden. Dieses Verarbeitungsschema wird mit einem Zyklus von vier Taktintervallen periodisch fortgesetzt.

Durch die Einführung der mit geringfügigem Aufwand realisierbaren Vorarbeitungseinheit wird es möglich, zur Entzerrung und Demodulation von verzerrt empfangenen binären CPM-Signalen einen relativ einfachen herkömmlichen Entzerrer/Detektor für binäre PAM-Signale zu verwenden. Hierdurch kann auf bewährte Schaltungskonzepte für Entzerrer/Detektoren für linear-modulierte Datensignale zurückgegriffen werden, und der Realisierungsaufwand gemessen an der Anzahl der auszuführenden Rechenoperationen im Entzerrer/Detektor reduziert sich erheblich. Insbesondere entfällt ein Großteil der im CPM-Entzerrer gemäß der Veröffentlichung von Svensson erforderlichen komplexen Multiplikationen, die restlichen reduzieren sich auf reelle Multiplikationen oder sehr einfache vorzeichengesteuerte Additionen/Subtraktionen.

Um die Vereinfachungen aufzuzeigen, welche mit der Vorverarbeitung erzielt werden können, wird im folgenden ein MLSE-Entzerrer für CPM-Signale, entsprechend dem Aufsatz von Svensson, mit einem MLSE-Verstärker für binäre PAM-Signale verglichen. Als Beispiel wird eine binäre CPM mit einem Modulationsindex von $h = 0{,}5$, einer Bitperiode T, einer Partial-Response der Pulsdauer von L Bitperioden und einer Kanalimpulsantwort, die K Bits umfaßt, angenommen.

Entsprechend dem Aufsatz von Svensson arbeitet der dort beschriebene CPM-Entzerrer mit einem Zustandsgraphen mit $2^{L+K}$-Zuständen. Zum Zeitpunkt $t_n = nT$ ist der Zustandsvektor

$$Z_n = (\theta_n, b_{n-1}, \dots, b_{n-L-K+1})$$

durch die zeitlich zurückliegenden Datenbits $b_{n-1}, \dots, b_{n-L-K+1}$, deren Dateninhalt die Werte +1 bzw. -1 aufweisen und durch den Phasenzustand $\theta_n$ vorgegeben. Der Phasenzustand $\theta_n$ ist abhängig von allen zeitlich zurückliegenden Datenbits und enthält den Wert 0 oder $\pi$ wenn n gerade ist und $\pi/2$ oder $3\pi/2$ wenn n ungerade ist. Insbesondere ist

$$\Theta_n = (\pi/2 \sum_{i<n-L-K+1} b_i) \mod 2 \quad .$$

Die Tatsache, daß der Phasenzustand $\theta_n$ für jeden durch den Viterbi-Algorithmus entwickelten Datenweg berechnet werden muß, wenn der Zustandsgraph durchlaufen wird, ist ein ausschlaggebender Gesichtspunkt, welcher den Aufbau eines CPM-Entzerrers kompliziert und anspruchsvoll werden läßt. Dieser Nachteil wird vermieden, wenn eine Vorverarbeitungseinheit verwendet wird.

Ein weiterer Nachteil des CPM-Entzerrers ist die zur Rekonstruktion eines nicht-linearen Partial-Response-CPM-Signals erforderliche komplexe Berechnung, die $2^{L+K-1}$ verschiedene Bitmuster und die Faltung dieser Bitmuster mit der Kanalimpulsantwort h(t) erfordert. Mit dem empfangenen komplexen Basisbandsignal x(t) und der CPM-Phasenübergangsfunktion q(t) berechnet sich der Metrikzuwachs für jeden Zustandsübergang zu

$$M_n = \int_{nT}^{(n+1)T} x(t)-s(t,b_n,Z_n)^2 \, dt$$

wobei

$$s(t,b_n,Z_n) = \exp\left[j\theta_n + j\pi \sum_{i=n-L-K+1}^{n} b_i q(t-iT)\right] * h(t)$$

Wird die Vorverarbeitungseinheit angewandt, so kann ein sehr viel einfacherer MLSE-Entzerrer für binäre PAM-Signale zur Entzerrung und Detektierung des CPM-Sginals verwendet werden. Der PAM-Entzerrer verwendet einen regulären Zustandsgraphen mit $2^{L+K}$-Zuständen. Der Zustandsvektor zum Zeitpunkt $t_n = nT$ ist
$$Z_n = (b_{n-1},...,b_{n-L-K}).$$
Dadurch, daß bei diesem Zustandsdiagramm ein Phasenzustand nicht zu berücksichtigen ist, vereinfacht sich die Verarbeitung durch einen Viterbi/MLSE-Entzerrer wesentlich.

Darüber hinaus ist die Komplexität der Metrikberechnung viel geringer, da das Referenzsignal $s(t, b_n, Z_n)$ nun durch

$$s(t,b_n,Z_n) = \sum_{i=n-L-K}^{n} b_i h'(t-iT)$$

gegeben ist, wobei h'(t) eine modifizierte Impulsantwort des Übertragungskanals ist, welche die Partial-Response-Eigenschaften der CPM beinhaltet. Ein Kanalschätzer, der ein entsprechend vorverarbeitetes Gegenstück zum Signal x(t) verarbeitet, ist daher in der Lage, eine Schätzung der Kanalimpulsantwort h'(t) direkt abzuleiten, ohne zusätzliche Verarbeitungsschritte. Während bei einem CPM-MLSE-Entzerrer die Berechnung des Referenzsignals $s(t,b_n,Z_n)$ eine größere Anzahl von komplexen Multiplikationen erfordert, so werden im Falle eines PAM-MLSE-Entzerrers nur wenige Additionen und Subtraktionen immer noch unter der Voraussetzung, daß die Datensymbole $b_i$ die Werte +1 bzw. -1 aufweisen, benötigt.

Im Vergangenen wurde von einer CPM ausgegangen, bei der jedem Datenbit $b_i$ unmittelbar eine Phasenänderung zugeordnet ist. Auf der Empfangsseite erhält man dann die gesendeten Datenbits $b_i$ aus den am Ausgang des PAM-MLSE-Entzerrers abgreifbaren Datenbits durch differentielle Decodierung dieser Datenbits.

In einer weiteren Ausgestaltung der Erfindung ist der Entzerrer/Detektor als adaptiver Enterrer/Detektor ausgeführt und ein Kanalschätzer vorgesehen, zum Erzeugen einer aus zwei Quadraturkomponenten bestehenden Schätzung der momentanen Kanalimpulsantwort, welche Quadraturkomponenten über eine zweite Vorverarbeitungseinheit dem adaptiven Entzerrer/Detektor zuführt.

Die Erfindung wird nun anhand der in Zeichnungen dargestellten Ausführungsbeispiele näher beschrieben und erläutert.

Es zeigen:

Fig. 1 ein Ausführungsbeispiel der Erfindung.

Fig. 2 ein Ausführungsbeispiel mit einem adaptiven Entzerrer/Detektor.

Das in Fig. 1 dargestellte Ausführungsbeispiel zeigt eine Vorrichtung zum Entzerren und Demodulieren eines Empfangssignales r(t). Diese Vorrichtung ist Teil eines nicht dargestellten Empfangsgerätes eines Übertragungssystems. Zu übertragende digitale Daten werden in einem nicht dargestellten Sendegerät auf ein Trägersignal durch einen nicht-linearen CPM-Modulator aufmoduliert. Das Sendesignal wird über eine Übertragungsstrecke dem Empfänger zugeführt. Als Übertragungsstrecke können sowohl leitungsgebundene, wie zum Beispiel Glasfaserstrecken, oder auch leitungsungebundene Übertragungsstrecken, wie zum Beispiel Funkstrecken, Verwendung finden. Durch Laufzeitunterschiede, Reflexionen und andere auf der Übertragungsstrecke auftretende Effekte, kann im Empfangsteil anstelle des Sendesignales nur das verzerrte und durch Rauschen oder sonstige Störungen beeinträchtigte Empfangssignal r(t) empfangen werden.

Das verzerrte Empfangssignal r(t) ist einem Basisbandumsetzer 10 zugeführt, der auf bekannte Weise aus einem Bandpaßfilter, zwei Mischern und jeweils einem den Mischern nachgeschalteten Tiefpaßfilter aufgebaut ist, wobei den Mischern zwei Quadratur-Träger zugeführt sind, deren Frequenz der Trägerfrequenz des Empfangssignals r(t) entspricht. Der Basisbandumsetzer 10 liefert an seinem ersten Ausgang eine In-Phase-Komponente I und an seinem zweiten Ausgang eine Quadratur-Phase-Komponente Q. Die I-Komponente ist einem ersten Eingang 1 eines ersten Multiplexers 23 und einem zweiten Eingang 2 eines zweiten Multiplexers 24 sowie einem ersten Inverter 21 zugeführt. Der Ausgang des ersten Inverters 21 ist mit dem dritten Eingang 3 des ersten Multiplexers 23 und mit dem vierten Eingang 4 des zweiten Multiplexers 24 verbunden. Die Q-Komponente ist dem vierten Eingang 4 des ersten Multiplexers 23 und dem ersten Eingang 1 des zweiten Multiplexers 24 sowie einem zweiten Inverter 22 zugeführt. Der Ausgang des zweiten Inverters 22 ist mit dem zweiten Eingang 2 des ersten Multiplexers 23 und mit dem dritten Eingang 3 des zweiten Multiplexers 24 verbunden. Der Ausgang des ersten Multiplexers 23 ist mit dem ersten Eingang eines Entzerrers/Detektors 30, der Ausgang des zweiten Multiplexers 24 mit einem zweiten Eingang dieses Entzerrers/Detektors verbunden. Der Entzerrer/Detektor 30 liefert an seinem Ausgang D demodulierte Daten, die - zumindest bei guten Übertragungsbedingungen - den ursprünglich gesendeten Daten entsprechen.

In einer möglichen Ausführungsform ist der Entzerrer/Detektor 30 durch einen MLSE-Entzerrer realisiert, welcher den Viterbi-Algorithmus benutzt. Ausführungsformen von Viterbi-MLSE-Entzerrern für lineare Modulationsarten wie PAM oder QAM sind beschrieben in G.D. Forney, "Maximum-likelihood sequence estimation of digital sequences in the presence of intersymbol interference", IEEE Transactions on Information Theory, Vol. IT-18, pp.363-378, May 1972 und in G. Ungerboeck, "Adaptive maximum-likelihood receiver for carrier-modulated data-transmission systems", IEEE Transactions on Communications, Vol. COM-22, pp. 624-636, May 1974.

Im Ausführungsbeispiel der Erfindung wird ein Viterbi-MLSE-Entzerrer für binäre PAM-Signale verwendet, wobei als Datensymbole die Werte +1 und -1 Anwendung finden.

Der Entzerrer/Detektor 30 liefert außerdem an einem Ausgang T einen zum Empfangssignal r(t) synchronen Bittakt Cl, welcher an den Takteingang eines Zählers 25 geführt ist. Dieses Taktsignal kann aber beispielsweise auch von einer gesonderten Takterzeugungseinheit geliefert werden. Die beiden Inverter 21, 22, die beiden Multiplexer 23, 24 und der Zähler 25 bilden zusammen eine Vorverarbeitungseinheit 20.

Der Zähler 25 ist ein Modulo-4-Zähler, dessen Zählerausgänge mit Steuereingängen der beiden Multiplexer 23 und 24 verbunden sind. Aufgrund des jeweiligen Zählzustandes Null bis Drei wählen die Multiplexer aus den vier Eingängen 1, 2, 3, 4 jeweils einen Eingang aus, dessen Signal für jeweils die Dauer eines Taktintervalles des Bittaktes Cl an den Ausgang des betreffenden Multiplexers weitergeschaltet wird. In Fig. 1 ist der Schaltzustand der Multiplexer für den Zählerstand Null dargestellt. Bei jedem Taktschritt des Bittaktes Cl wird der Zählerstand um jeweils Eins erhöht, wobei bei Erreichen des Zählerstandes Drei beim nächsten Taktschritt des Bittaktes Cl wieder der Zählerstand Null folgt. Beim Zählerstand Null werden dann die ersten Eingänge 1 der beiden Multiplexer, beim Zählerstand Eins die zweiten Eingänge 2 der Multiplexer, beim Zählerstand Zwei die dritten Eingänge 3, beim Zählerstand Drei die Eingänge 4 zu den Ausgängen der betreffenden Multiplexer 23 bzw. 24 durchgeschaltet.

Die folgende Tabelle zeigt die an den Ausgängen der Multiplexer abgegebenen Signale in Abhängigkeit des Zählerstandes des Zählers 25.

| Z | E | I' | Q' |
|------|---|----|----|
| Null | 1 | I | Q |
| Eins | 2 | -Q | I |
| Zwei | 3 | -I | -Q |
| Drei | 4 | Q | -I |

In der Spalte Z sind die Zählerstände des Zählers 25, in der Spalte E die bei diesen Zählerständen jeweils durchgeschalteten Eingänge 1, 2, 3, 4 der Multiplexer 23, 24 angegeben. In der Spalte I' sind die an den Ausgängen des ersten Multiplexers auftretenden Signalkomponenten und unter der Spalte Q' die an den Ausgängen des zweiten Multiplexers auftretenden Signalkomponenten aufgelistet, welche sich aus dem Verdrahtungsschema der Multiplexereingänge mit dem Basisbandumsetzer 10 und den Invertern ergeben.

Aus dieser Tabelle ist ersichtlich, daß beim Zählerstand Null beide Quadraturkomponenten I und Q unverändert durchgeschaltet werden. Beim Zählerstand Eins wird die Q-Komponente invertiert und mit der I-Komponente vertauscht. Beim Zählerstand Zwei sind beide Quadraturkomponenten invertiert, aber wieder in ihrer ursprünglichen Anordnung durchgeschaltet. Beim Zählerstand Drei schließlich ist im Gegensatz zum Zählerstand Eins nun die I-Komponente invertiert und wieder sind beide Quadraturkomponenten miteinander vertauscht.

Die folgende zweite Tabelle zeigt eine andere Reihenfolge der im Rhythmus des Bittaktes CI vorgenommenen Invertierungen und Vertauschungen.

| Z | E | I' | Q' |
|------|---|----|----|
| Null | 1 | I | Q |
| Eins | 2 | Q | -I |
| Zwei | 3 | -I | -Q |
| Drei | 4 | -Q | I |

Im Unterschied zu der ersten Tabelle ist beim Zählerstand Eins die I-Komponente anstelle der Q-Komponente invertiert und beim Zählerstand Drei die Q-Komponente anstelle der I-Komponente invertiert, wobei wiederum bei diesen beiden Zählerständen die beiden Signalkomponenten I und Q vertauscht werden. Diese Reihenfolge läßt sich durch eine kleine Veränderung der Verschaltung der Multiplexereingänge erreichen. Beide Schaltungen eignen sich gleich gut zur Ausführung der Erfindung.

Bei der dargestellten Ausführungsform der Erfindung sind die beiden den Invertern und Multiplexern zugeführten Quadraturkomponenten I und Q durch einen im Basisbandumsetzer 10 enthaltenen, nicht dargestellten, Analog-Digital-Wandler bereits in eine Darstellung durch digitale Datenworte umgewandelt. Die Multiplexer sind daher als digitale Multiplexer, die Inverter, je nach der verwendeten Darstellung der dem Analog-Digital-Wandler entstammenden Datenworte, als Vorzeichenumkehrer beziehungsweise als Komplementbildner ausgeführt.

In einem weiteren, nicht dargestellten, Ausführungsbeispiel ist die Vorverarbeitungseinheit teilweise mit analogen Bauelementen aufgebaut. Der Basisbandumsetzer 10 ist ohne Digital-Analog-Wandler ausgeführt, liefert die Quadraturkomponenten I und Q also als analoges Signal. Die beiden Inverter 21 und 22 sind hierbei als invertierende Verstärker mit einem Verstärkungsfaktor von Eins, die beiden Multiplexer 23 und 24 als analoge Multiplexer, ausgeführt. Die Verschaltung der Multiplexer 23, 24 bleibt gegenüber dem in Fig. 1 gezeigten Ausführungsbeispiel unverändert. Jeweils zwischen einem Ausgang eines Multiplexers 23, 24 und einem Eingang des digital realisierten Entzerrers/Detektors 30 befindet sich jetzt ein Analog-Digital-Wandler.

Bei den im Ausführungsbeispiel gesendeten Daten sind jeweils eine definierte Anzahl von Datenbits in einem Datenrahmen zusammengefaßt. Mit Hilfe eines aus dem empfangenen Datensignal gewonnenen Rahmensynchronisationssignales wird der Zählbeginn des Zählers 25 jeweils mit dem Beginn eines Datenrahmens synchronisiert. Hierdurch ist zum Beispiel beim ersten Datenbit eines jeden Datenrahmens jeweils der erste

EP 0 350 999 B1

Eingang der beiden Multiplexer durchgeschaltet.

In einem nicht dargestellten Ausführungsbeispiel ist der Entzerrerteil des Entzerrers/Detektors 30 als sogenannter adaptiver Entzerrer ausgeführt. Beispielsweise durch rekursive Adaption oder durch eine auf der Beobachtung der vorverarbeiteten Quadraturkomponenten I' und Q' basierenden Kanalschätzung paßt sich der Entzerrer/Detektor an die Übertragungseigenschaften der Übertragungsstrecke an.

Bei der Verwendung eines adaptiven Entzerrers/Detektors ist eine Rahmensynchronisation des Zählers bzw. der Multiplexer nicht erforderlich. Ein Voreilen bzw. Nacheilen der Multiplexer stellt sich in diesem Fall für den adaptiven Entzerrer/Detektor als eine konstante Phasenverdrehung um ein Vielfaches von 90° dar, die der Entzerrer/Detektor beim Adaptionsvorgang genauso ausgleicht, als sei es eine auf dem Übertragungsweg aufgetretene konstante Phasenverdrehung.

Fig. 2 zeigt ein Ausführungsbeispiel einer Vorrichtung zur Entzerrung und Demodulation eines binären winkelmodulierten Datensignales mit einem Basisbandumsetzer 100, einem adaptiven Entzerrer/Detektor 300 sowie mit einer ersten und einer zweiten Vorverarbeitungseinheit 201, 202 und mit einem Kanalschätzer 400. Beide Vorverarbeitungseinheiten 201, 202 entsprechen in ihrer Wirkung der bereits in dem ersten Ausführungsbeispiel geschilderten Vorverarbeitungseinheit 20.

In jedem Datenrahmen des gesendeten Signales ist eine definierte Bitfolge als Trainingssignal enthalten. Mit Hilfe dieses bekannten Trainingssignales werden die auf dem Übertragungsweg auftretenden Signalverzerrungen im Detail erfaßt und ausgewertet. Die beiden Quadraturkomponenten I und Q werden zum einen direkt dem Kanalschätzer 400 zugeführt, zum anderen über die erste Vorverarbeitungseinheit 201 dem adaptiven Entzerrer/Detektor 300. Der Kanalschätzer 400 wertet das in den beiden Quadraturkomponenten I und Q verzerrt enthaltene Trainingssignal aus und erzeugt auf bekannte Weise eine Schätzung der momentanen Kanalimpulsantwort. Diese Kanalimpulsantwort besteht ebenfalls aus zwei Quadraturkomponenten i und q. Diese beiden Quadraturkomponenten sind der zweiten Vorverarbeitungseinheit 202 zugeführt, welche durch Invertieren und Vertauschen in geschilderter Weise zwei Signale i' und q' erzeugt. Diese vorverarbeiteten Signalkomponenten i', q' sind Einstelleingängen des adaptiven Entzerrers/Detektors 300 zugeführt. Mittels dieser Signale werden Koeffizienten des adaptiven Entzerrers/Detektors 300 so eingestellt, daß die auf dem Übertragungsweg aufgetretenen Signalverzerrungen rückgängig gemacht bzw. berücksichtigt werden.

Auch bei der in Fig. 2 dargestellten Ausführung eines adaptiven Entzerrers/Detektors müssen die Zähler bzw. Multiplexer der Vorverarbeitungseinheiten 201 und 202 nicht unbedingt mit dem Datenrahmen synchronisiert sein. Die Zähler bzw. Multiplexer der Vorverarbeitungseinheiten 201 und 202 müssen jedoch untereinander synchronisiert sein, d.h. ihre Anfangszustände müssen in jedem Datenrahmen in einem definierten Verhältnis zueinander stehen.

Zur Entzerrung und Demodulation eignen sich auch programmgesteuerte Signalprozessoren. Durch eine Vorverarbeitung der Signalkomponenten, wobei diese Vorverarbeitung auch mittels des Signalprozessors selbst realisiert sein kann, werden auch hier entscheidende Vorteile erzielt. Durch Verringerung des Rechenaufwandes wird zum einen der Konstruktions- beziehungsweise Programmieraufwand verringert, zum anderen wird auf diese Weise die Signalbearbeitungszeit verkürzt.

**Patentansprüche**

1. Vorrichtung zur Entzerrung und Demodulation eines binären phasenstetig winkelmodulierten Datensignals mit dem Modulationsindex h = 0,5, wobei die Vorrichtung mit einem Basisbandumsetzer (10) versehen ist zur Erzeugung der beiden Quadraturkomponenten (I, Q) eines empfangenen modulierten Datensignals (r(t)) im Basisband und mit einem Entzerrer/Detektor (30), welchem beide Quadraturkomponenten zur Rückgewinnung des ursprünglichen binären Datensignals zugeführt werden,
dadurch gekennzeichnet,
daß zwischen Basisbandumsetzer (10) und Entzerrer/Detektor (30) eine Vorverarbeitungseinheit (20) vorgesehen ist zum Durchführen einer Signalverarbeitung, die einer in diskreten Schritten in einer vorgegebenen Rotationsrichtung fortlaufenden Phasenrotation des durch die Quadraturkomponenten (I, Q) dargestellten modulierten Datensignals im Basisband entspricht, wobei der Betrag des Winkels des diskreten Phasenrotationsschrittes pro Bitintervall des im modulierten Datensignal enthaltenen binären Datensignals sich auf 90° beläuft.

2. Vorrichtung nach Anspruch 1,
dadurch gekennzeichnet,
daß der Entzerrer/Detektor (30) als adaptiver Entzerrer/Detektor ausgeführt ist und daß ein Kanalschätzer vorgesehen ist, der aus den vorverarbeiteten Quadraturkomponenten (I', Q') eine aus zwei Quadratur-

7

EP 0 350 999 B1

komponenten (i′, q′) bestehende Schätzung der momentanen Kanalimpulsantwort erzeugt, welches als Einstellsignal direkt dem adaptiven Entzerrer/Detektor zugeführt ist.

**3.** Vorrichtung nach Anspruch 1,
dadurch gekennzeichnet,
daß der Entzerrer/Detektor als adaptiver Entzerrer/Detektor (300) ausgeführt ist und daß ein Kanalschätzer (400) vorgesehen ist, der aus den Quadraturkomponenten (I, Q) eine aus zwei Quadraturkomponenten (i, q) bestehende Schätzung der momentanen Kanalimpulsantwort erzeugt, welche zur Erhaltung eines Einstellsignals über eine zweite Vorverarbeitungseinheit (202) dem adaptiven Entzerrer/Detektor (300) zugeführt ist, wobei die beiden Vorverarbeitungseinheiten (201, 202) die gleichen Signalverarbeitungen untereinander synchron durchführen.

**4.** Vorrichtung nach einem der Ansprüche 1 bis 3,
dadurch gekennzeichnet,
daß die Quadraturkomponenten (I, Q) in der Vorverarbeitungseinheit (20) taktweise verarbeitet werden, wobei in einem ersten Taktintervall beide Quadraturkomponenten unverändert weitergegeben werden, in einem darauffolgenden zweiten Taktintervall eine der beiden Quadraturkomponenten invertiert wird, in einem dritten Taktintervall beide Quadraturkomponenten invertiert werden und in einem vierten Taktintervall die Quadraturkomponente invertiert wird, welche im zweiten Taktintervall nicht invertiert wurde, wobei jeweils im zweiten und vierten Taktintervall die beiden Quadraturkomponenten zusätzlich zu den beschriebenen Invertierungen miteinander vertauscht werden.

**5.** Vorrichtung nach Anspruch 4,
dadurch gekennzeichnet,
daß die Zeitdauer eines Taktintervalles der Länge eines Bitintervalles eines in den Quadraturkomponenten (I, Q) enthaltenen binären Digitalsignales entspricht.

**6.** Vorrichtung nach einem der Ansprüche 1 bis 5,
dadurch gekennzeichnet,
daß die Vorverarbeitungseinheit (20) aus einem ersten Inverter (21), dessen Eingang mit einem ersten Ausgang des Basisbandumsetzers (10) verbunden ist, und einem zweiten Inverter (22), dessen Eingang mit einem zweiten Ausgang des Basisbandumsetzers (10) verbunden ist, und zwei Multiplexern (23, 24) mit jeweils vier Eingängen, welche von einem Modulo-4-Zähler (25) gesteuert werden, aufgebaut ist und die Ausgänge der Multiplexer (23, 24) mit den Eingängen des Entzerrers/Detektors (30) verbunden sind.

**7.** Vorrichtung nach Anspruch 6,
dadurch gekennzeichnet,
daß der Modulo-4-Zähler (25) durch ein Rahmensynchronisationssignal gesteuert wird.

**8.** Vorrichtung nach Anspruch 6,
dadurch gekennzeichnet,
daß der erste Eingang (1) des ersten Multiplexers (23) mit dem ersten Ausgang des Basisbandumsetzers (10), der erste Eingang (1) des zweiten Multiplexers (24) mit dem zweiten Ausgang des Basisbandumsetzers (10), der zweite Eingang (2) des ersten Multiplexers (23) mit dem Ausgang des zweiten Inverters (22) und der zweite Eingang (2) des zweiten Multiplexers (24) mit dem ersten Ausgang des Basisbandumsetzers (10), der dritte Eingang (3) des ersten Multiplexers (23) mit dem Ausgang des ersten Inverters (21) und der dritte Eingang (3) des zweiten Multiplexers (24) mit dem Ausgang des zweiten Inverters (22) und der vierte Eingang (4) des ersten Multiplexers (23) mit dem zweiten Ausgang des Basisbandumsetzers (10) und der vierte Eingang (4) des zweiten Multiplexers (24) mit dem Ausgang des ersten Inverters (21) verbunden ist.

**9.** Vorrichtung nach Anspruch 6,
dadurch gekennzeichnet,
daß der erste Eingang (1) des ersten Multiplexers (23) mit dem ersten Ausgang des Basisbandumsetzers (10), der erste Eingang (1) des zweiten Multiplexers (24) mit dem zweiten Ausgang des Basisbandumsetzers (10), der zweite Eingang (2) des ersten Multiplexers (23) mit dem zweiten Ausgang des Basisbandumsetzers (10) und der zweite Eingang (2) des zweiten Multiplexers (24) mit dem Ausgang des ersten Inverters (21), der dritte Eingang (3) des ersten Multiplexers (23) mit dem Ausgang des ersten Inverters (21) und der dritte Eingang (3) des zweiten Multiplexers (24) mit dem Ausgang des zweiten Inverters (22)

8

und der vierte Eingang (4) des ersten Multiplexers (23) mit dem Ausgang des zweiten Inverters (22) und der vierte Eingang (4) des zweiten Multiplexers (24) mit dem ersten Ausgang des Basisbandumsetzers (10) verbunden ist.

**10.** Vorrichtung nach einem der Ansprüche 1 bis 9,
dadurch gekennzeichnet,
daß der Entzerrer/Detektor (30) ein für binäre 0°/180° phasensprungmodulierte Datensignale geeigneter Entzerrer/Detektor ist.

**11.** Vorrichtung nach einem der Ansprüche 1 bis 9,
dadurch gekennzeichnet,
daß der Entzerrer/Detektor (30) ein für binäre puls-amplituden-modulierte Datensignale geeigneter Entzerrer/Detektor ist.

**Claims**

**1.** Device for equalizing and demodulating a binary continuous-phase angle-modulated data signal with a modulation index h = 0.5, said device comprising a baseband converter (10) for producing both quadrature components (I, Q) of a received modulated data signal (r(t)) in the baseband, and an equalizer/detector (30) to which both baseband quadrature components are applied for recovering the original binary data signal, characterized in that a preprocessing unit (20) is coupled between the baseband converter (10) and the equalizer/detector (30) for performing a signal processing which corresponds to a phase rotation, progressing in discrete steps in a predetermined sense, of the modulated data signal represented by the baseband quadrature components (I, Q), the magnitude of the discrete phase rotating step per bit interval of the binary data signal contained in the modulated data signal amounting to 90°.

**2.** Device as claimed in Claim 1, characterized in that the equalizer/detector (30) is implemented as an adaptive equalizer/detector and in that a channel estimator is provided producing from the preprocessed quadrature components (I′, Q′) an estimate of the instantaneous channel impulse response consisting of two quadrature components (i′, q′) which response is directly applied as an adjusting signal to the adaptive equalizer/detector.

**3.** Device as claimed in Claim 1, characterized in that the equalizer/detector is implemented as an adaptive equalizer/detector (300) and in that a channel estimator (400) is provided producing from the quadrature components (I, Q) an estimate of the instantaneous channel impulse response consisting of two quadrature components (i, q) which response, for the purpose of obtaining adjusting signals, is applied to the adaptive equalizer/detector via a second preprocessing unit (202), the two preprocessing units (201, 202) effecting the same signal processing operations in synchronism with each other.

**4.** Device as claimed in one of the Claims 1 to 3, characterized in that the quadrature components (I, Q) in the preprocessing unit (20) are processed at a clock rate, wherein in a first clock interval both quadrature components are conveyed without change, in a subsequent second clock interval, one of the two quadrature components is inverted, in a third clock interval both quadrature components are inverted and in a fourth clock interval the quadrature component is inverted that was not inverted in the second clock interval, in the second and fourth clock intervals the two quadrature components being interchanged in addition to the described inversions.

**5.** Device as claimed in Claim 4, characterized in that the period duration of a clock interval corresponds to the length of a bit interval of a binary data signal contained in the quadrature components (I, Q).

**6.** Device as claimed in one of the Claims 1 to 5, characterized in that the preprocessing unit (20) is formed by a first inverter (21) whose input is connected to a first output of the baseband converter (10), and a second inverter (22) whose input is connected to a second output of the baseband converter (10), and by two multiplexers (23, 24) having each four inputs which are controlled by a modulo-4- counter (25), the outputs of the multiplexers (23, 24) being connected to the inputs of the equalizer/detector (30).

**7.** Device as claimed in Claim 6, characterized in that the modulo-4 counter (25) is controlled by a frame synchronization signal.

8.  Device as claimed in Claim 6, characterized in that the first input (1) of the first multiplexer (23) is connected to the first output of the baseband converter (10), the first input (1) of the second multiplexer (24) to the second output of the baseband converter (10), the second input (2) of the first multiplexer (23) to the output of the second inverter (22) and the second input (2) of the second multiplexer (24) to the first output of the baseband converter (10), the third input (3) of the first multiplexer (23) to the output of the first inverter (21) and the third input (3) of the second multiplexer (24) to the output of the second inverter (22), and the fourth input (4) of the first multiplexer (23) to the second output of the baseband converter (10) and the fourth input (4) of the second multiplexer (24) to the output of the first inverter (21).

9.  Device as claimed in Claim 6, characterized in that the first input (1) of the first multiplexer (23) is connected to the first output of the baseband converter (10), the first input (1) of the second multiplexer (24) to the second output of the baseband converter (10), the second input (2) of the first multiplexer (23) to the second output of the baseband converter (10) and the second input (2) of the second multiplexer (24) to the output of the first inverter (21), the third input (3) of the first multiplexer (23) to the output of the first inverter (21) and the third input (3) of the second multiplexer (24) to the output of the second inverter (22), the fourth input (4) of the first multiplexer (23) to the output of the second inverter (22) and the fourth input (4) of the second multiplexer (24) to the first output of the baseband converter (10).

10. Device as claimed in one of the Claims 1 to 9, characterized in that the equalizer/detector (30) is an equalizer/detector suitable for binary 0°/180° phase shift keyed modulated data signals.

11. Device as claimed in one of the Claims 1 to 9, characterized in that the equalizer/detector (30) is an equalizer/detector suitable for binary pulse amplitude modulated data signals.

## Revendications

1.  Dispositif pour l'égalisation et la démodulation d'un signal de données binaires à modulation angulaire en phase continue avec indice de modulation h = 0,5, le dispositif étant équipé d'un convertisseur de bande de base (10) destiné à la génération des deux composantes en quadrature (I, Q) d'un signal modulé de données (r(t)) reçu dans la bande de base ainsi que d'un égaliseur/détecteur (30) auquel les deux composantes en quadrature sont acheminées aux fins de récupération du signal de données binaires primitif, et caractérisé en ce que il est prévu, entre le convertisseur de bande de base (10) et l'égaliseur/détecteur (30), une unité de prétraitement (20) destinée à l'exécution d'un traitement du signal correspondant à une rotation de phase continue par étapes discrètes, dans un sens de rotation préétabli, dans la bande de base du signal de données modulé représenté par les composantes en quadrature (I, Q) la valeur de l'angle de l'étape discrète de rotation de phase par intervalle de bit du signal binaire de données contenu dans le signal de données modulé étant de 90°.

2.  Dispositif selon la revendication 1, caractérisé en ce que l'égaliseur/détecteur (30) est conçu sous la forme d'un égaliseur/détecteur adaptatif et qu'il est prévu un évaluateur de voie qui génère, au départ des composantes en quadrature (I', Q') prétraitées, une évaluation constituée de deux composantes en quadrature (i', q') de la réponse instantanée d'impulsion de voie, réponse qui est transmise directement à l'égaliseur/détecteur adaptatif en tant que signal de réglage.

3.  Dispositif selon la revendication 1, caractérisé par le fait que l'égaliseur/détecteur (30) est réalisé sous la forme d'un égaliseur/détecteur adaptatif (300) et qu'il est prévu un évaluateur de voie (400) qui génère, au départ des composantes en quadrature (I, Q), une évaluation constituée de deux composantes en quadrature (i, q) de la réponse instantanée d'impulsion de voie, réponse qui est transmise via une deuxième unité de prétraitement (202) à l'égaliseur/détecteur adaptatif (300) afin d'obtenir un signal de réglage, les deux unités de prétraitement (201, 202) exécutant de manière synchrone les même traitements de signal.

4.  Dispositif selon l'une quelconque des revendications 1 à 3, caractérisé en ce que les composantes en quadrature (I, Q) sont traitées en cadence dans l'unité de prétraitement (20), étant entendu que, dans un premier intervalle de cadençage les deux composantes en quadrature sont transmises non modifiées que, dans un deuxième intervalle de cadençage suivant, l'une des deux composantes en quadrature est inversée que, dans un troisième intervalle de cadençage, les deux composantes en quadrature sont inversées et que, dans un quatrième intervalle de cadençage, sera inversée la composante en quadrature qui n'a pas été inversée dans le deuxième intervalle de cadençage, les deux composantes en quadrature dans les deuxième et quatrième intervalles de cadençage, en plus de leurs inversions décrites, étant également chaque fois soumises à permutation.

5. Dispositif selon la revendication 4, caractérisé en ce que la durée d'un intervalle de cadençage correspond à la longueur d'un intervalle de bit d'un signal numérique binaire contenu dans les composantes en quadrature (I, Q).

6. Dispositif selon l'une quelconque des revendications 1 à 5, caractérisé en ce que l'unité de prétraitement (20) est constituée d'un premier inverseur (21) dont l'entrée est reliée à une première sortie du convertisseur de bande de base (10) et d'un deuxième inverseur (22) dont l'entrée est reliée à une deuxième sortie du convertisseur de bande de base (10) ainsi que de deux multiplexeurs (23, 24) à quatre entrées chacun, qui sont commandés par un compteur modulo-4 (25) et les sorties des multiplexeurs (23, 24) sont reliées aux entrées de l'égaliseur/détecteur (30).

7. Dispositif selon la revendication 6, caractérisé en ce que le compteur modulo-4 (25) est commandé par un signal de synchronisation de trame.

8. Dispositif selon la revendication 6, caractérisé en ce que la première entrée (1) du premier multiplexeur (23) est reliée à la première sortie du convertisseur de bande de base (10), la première entrée (1) du deuxième multiplexeur (24) est reliée à la deuxième sortie du convertisseur de bande de base (10), la deuxième entrée (2) du premier multiplexeur (23) est reliée à la sortie du deuxième inverseur (22), la deuxième entrée (2) du deuxième multiplexeur (24) est reliée à la première sortie du convertisseur de bande de base (10), la troisième entrée (3) du premier multiplexeur (23) est reliée à la sortie du premier inverseur (21), la troisième entrée (3) du deuxième multiplexeur (24) est reliée à la sortie du deuxième inverseur (22), la quatrième entrée (4) du premier multiplexeur (23) est reliée à la deuxième sortie (4) du convertisseur de bande de base (10) et la quatrième entrée (4) du deuxième multiplexeur (24) est reliée à la sortie du premier inverseur (21).

9. Dispositif selon la revendication 6, caractérisé en ce que la première entrée (1) du premier multiplexeur (23) est reliée à la première sortie du convertisseur de bande de base (10), la première entrée (1) du deuxième multiplexeur (24) est reliée à la deuxième sortie du convertisseur de bande de base (10), la deuxième entrée (2) du premier multiplexeur (23) est reliée à la deuxième sortie du convertisseur de bande de base (10) et la deuxième entrée (2) du deuxième multiplexeur (24) est reliée à la sortie du premier inverseur (21), la troisième entrée (3) du premier multiplexeur (23) est reliée à la sortie du premier inverseur (21), la troisième entrée (3) du deuxième multiplexeur (24) est reliée à la sortie du deuxième inverseur (22), la quatrième entrée (4) du premier multiplexeur (23) est reliée à la sortie de deuxième inverseur (22) et la quatrième entrée (4) du deuxième multiplexeur (24) est reliée à la première sortie du convertisseur de bande de base (10).

10. Dispositif selon l'une quelconque des revendications 1 à 9, caractérisé en ce que l'égaliseur/détecteur (30) est un égaliseur/détecteur approprié pour des signaux binaires de données à modulation par sauts de phase 0°/180°.

11. Dispositif selon l'une quelconque des revendications 1 à 9, caractérisé en ce quel'égaliseur/détecteur (30) est un égaliseur/détecteur approprié pour des signaux binaires de données à modulation d'impulsions en amplitude.

EP 0 350 999 B1

Fig. 1

Fig. 2

12